# EUROPEAN PATENT SPECIFICATION

(11) **EP 4 379 892 B1**
(45) Date of publication and mention of the grant of the patent: **28.10.2026**
(21) Application number: 23855827.4
(22) Date of filing: 09.02.2023
(51) Int. Cl.: H01M 4/38, H01M 10/052, H01M 10/0567, H01M 10/0569, H01M 10/42, H01M 4/58, H01M 10/0568

(54) **LITHIUM-SULFUR BATTERY COMPRISING AN ELECTROLYTE**
LITHIUM-SCHWEFEL-BATTERIE MIT EINEM ELEKTROLYT
BATTERIE AU LITHIUM-SOUFRE AVEC ÉLECTROLYTE

(30) Priority: 31.08.2022 KR 20220110397; 22.11.2022 KR 20220157791
(43) Date of publication of application: 05.06.2024
(73) Proprietor: LG ENERGY SOLUTION, LTD., Seoul 07335 (KR)
(72) Inventor: KWACK, Ho-Beom, Daejeon 34122 (KR); LEE, Chang-Hoon, Daejeon 34122 (KR)
(74) Representative: Goddar, Heinz J.
(86) International application number: PCT/KR2023/001942
(87) International publication number: WO 2024/048877

(56) References cited:
- KR-A- 20060 125 852
- KR-A- 20140 034 087
- KR-A- 20140 074 399
- KR-A- 20200 016 045
- KR-A- 20200 134 671
- KR-A- 20210 115 319
- US-A1- 2019 088 980

## Description

### TECHNICAL FIELD

The present disclosure relates to a lithium-sulfur battery comprising an electrolyte.

This application claims priority to Korean Patent Application No. 10-2022-0110397 filed on August 31, 2022 and Korean Patent Application No. 10-2022-0157791 filed on November 22, 2022.

### BACKGROUND ART

A lithium-sulfur battery is a battery system using a sulfur-based material having a sulfur-sulfur (S-S) bond for a positive electrode active material and a lithium metal for a negative electrode active material. Sulfur, the main component of the positive electrode active material, is abundant in nature and can be found around the world, is non-toxic and has low atomic weight.

As secondary batteries are used in a wide range of applications including electric vehicles (EVs) and energy storage systems (ESSs), attention is drawn to lithium-sulfur batteries theoretically having higher energy storage density by weight (~2,600 Wh/kg) than lithium-ion secondary batteries having lower energy storage density by weight (~250 Wh/kg).

During discharging, lithium-sulfur batteries undergo oxidation at the negative electrode active material, lithium, by releasing electrons into lithium cation, and reduction at the positive electrode active material, the sulfur-based material, by accepting electrons. Through the reduction reaction, the sulfur-based material is converted to sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic S₈ structure, and it is converted to lithium polysulfide (LiSx) by the reduction reaction and is completely reduced to lithium sulfide (Li₂S).

In this instance, the sulfur-based compound as the positive electrode active material has low reactivity with electrons and lithium ions when it is in solid phase, due to low electrical conductivity characteristics of sulfur. Accordingly, to improve the reactivity of sulfur in lithium-sulfur batteries, studies have been made to develop technology for producing intermediate polysulfide of Li₂Sₓto induce liquid phase reaction and improve the reactivity. These technologies use, as the solvent of the electrolyte, ether-based solvents in which lithium polysulfide dissolves well, such as dioxolane, dimethoxy ethane (DME). By this reason, the reactivity of sulfur and the battery life are affected by the amount of the electrolyte.

Recently, lithium-sulfur secondary batteries capable of low temperature operation required for aircraft and next-generation electric vehicles are under many research and development. However, in the lithium-sulfur secondary batteries, due to the elution of polysulfide (PS) from the positive electrode, the material resistance of the electrolyte increases, and accordingly, operation at low temperature is still challenging.

To sum, Li-S batteries undergo solid->liquid reaction whereby the active material is eluted in the form of PS from the positive electrode during first discharge (~2.3V) and liquid->solid reaction whereby the eluted PS migrates to the positive electrode through second discharge (~2.1V). Under this working principle, the largest amount of PS is eluted in the electrolyte at the end of the first discharge (State of Charge(SOC)=70) in which solid->liquid reaction is finished, and in this instance, the greatest overvoltage occurs in the lithium-sulfur batteries. During operation using a small amount of electrolytes, especially at SOC70 at which the largest amount of PS is eluted in the small amount of electrolytes, great overvoltage occurs and impedes the low electrolyte operation of the lithium-sulfur batteries.

In addition, when the ether-based solvents developed as the electrolytes of the lithium-sulfur batteries are used, gas is produced in the batteries during low temperature operation of the lithium-sulfur batteries due to low boiling point (bp) of the ether-based solvents, and thus there are explosion risks.

Accordingly, there is a need for the development of lithium-sulfur batteries with the controlled elution characteristics of polysulfide from the positive electrode, the controlled material resistance of the electrolyte and improved stability during battery operation with low electrolyte and high energy density.

US 2019/088980 A1 discloses a liquid electrolyte for a lithium-sulfur battery comprising a lithium salt and a non-aqueous solvent.

KR 2021 0115319 A discloses a lithium-sulfur secondary battery comprising a lithium salt and a non-aqueous solvent.

### DISCLOSURE

### Technical Problem

The present disclosure is designed to solve the above-described problem, and therefore the present disclosure is directed to providing a lithium-sulfur comprising an electrolyte for a lithium-sulfur battery with improved resistance characteristics by controlling the elution characteristics of polysulfide (PS) from a positive electrode.

In particular, the present disclosure is directed to providing a lithium-sulfur battery that suppresses the elution of polysulfide in the initial discharge step of the battery, reduces overvoltage and improves electrolyte resistance characteristics. Accordingly, the present disclosure is directed to providing a lithium-sulfur battery that prevents reactivity decrease and improves output characteristics.

Accordingly, the present disclosure is directed to providing a lithium-sulfur battery that achieves stable operation with low electrolyte and high energy.

### Technical Solution

To solve the above-described problem, according to an aspect of the present disclosure, there is provided a lithium-sulfur battery comprising an electrolyte for a lithium-sulfur battery of the following embodiments.

A lithium sulfur battery comprising an electrolyte for a lithium-sulfur battery according to a first embodiment comprises a lithium salt and a nonaqueous solvent, wherein the nonaqueous solvent comprises glycol ether, cyclic ether and acyclic ether represented by the following chemical formula 1:

[Chemical formula 1] R¹-O-R²

where R¹ is an unsubstituted or substituted C₁-C₃ alkyl group, and R² is an unsubstituted or substituted C₂-C₂₀ alkyl group;
a positive electrode comprising a positive electrode active material; and
a negative electrode comprising a negative electrode active material;
wherein the lithium-sulfur battery has an El/S ratio of 1.8 or more and 2.2 ml/g or less, the El/S ratio being a ratio of the electrolyte to the positive electrode active material;
wherein an amount of the glycol ether is 65 vol% or more, and a sum of amounts of the cyclic ether and the acyclic ether is 35 vol% or less, based on a total volume of the nonaqueous solvent, and
wherein the amount of the acyclic ether is 20 vol% or less based on the total volume of the nonaqueous solvent

According to a second embodiment, in the first embodiment, the R¹ may be an unsubstituted or substituted C₁-C₂ alkyl group, and the R²may be an unsubstituted C₄-C₁₀ alkyl group; or a substituted C₂-C₁₀alkyl group.

According to a third embodiment, in the first or second embodiment, the acyclic ether may comprise fluorine-free acyclic ether.

According to a fourth embodiment, in any one of the first to third embodiments,the acyclic ether may comprise fluorine-free acyclic ether, and the fluorine-free acyclic ether may comprise methyl propyl ether, ethyl propyl ether, dipropyl ether, methyl butyl ether, methyl hexyl ether, ethyl butyl ether, ethyl hexyl ether or a mixture thereof.

According to a fifth embodiment, in any one of the first to fourth embodiments, the acyclic ether may comprise fluorine-containing acyclic ether.

According to a sixth embodiment, in any one of the first to fifth embodiments, the acyclic ether may comprise fluorine-containing acyclic ether, and the fluorine-containing acyclic ether may comprise bis-(2,2,2-trifluoroethyl) ether.

According to a seventh embodiment, in any one of the first to sixth embodiments, the electrolyte for the lithium-sulfur battery may not comprise 1,1,2,2-tetrafluoroethyl-2,2,3,3-tetrafluoropropyl ether.

According to an eighth embodiment, in any one of the first to seventh embodiments, the glycol ether may comprise at least one of dimethoxy ethane, diethoxy ethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether or polyethylene glycol methyl ethyl ether.

According to a ninth embodiment, in any one of the first to eighth embodiments, the cyclic ether may comprise at least one of furan, 2-methyl furan, 3-methyl furan, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene or 2,5-dimethylthiophene.

According to a tenth embodiment, in any one of the first to ninth embodiments, the lithium salt may comprise at least one of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lower aliphatic lithium carboxylate, lithium tetraphenylborate or lithium imide.

According to a eleventh embodiment, in any one of the first to tenth embodiments, the acyclic ether may be included in an amount of 5 vol% or less based on a total volume of the nonaqueous solvent.

According to a twelfth embodiment, in any one of the first to eleventh embodiments, the electrolyte for the lithium-sulfur battery may further comprise a nitric acid compound, a nitrous acid compound or a mixture thereof.

According to a thirteenth embodiment, in the first to the twelfth embodiment, the positive electrode active material may comprise sulfur, a sulfur compound or a mixture thereof.

According to an fourteenth embodiment, in any one of the first to thirdteenth embodiments, the positive electrode active material may comprise an inorganic sulfur (S₈), Li₂Sn (n≥1), a disulfide compound, an organic sulfur compound, a carbon-sulfur polymer ((C₂Sₓ)ₙ, x=an integer of 2.5 to 50, n≥2) or a mixture thereof.

According to a fifteenth embodiment, in any one of the first to fourteenth embodiments, the negative electrode active material may comprise a lithium metal, a lithium alloy or a mixture thereof.

### Advantageous Effects

The electrolyte for the lithium-sulfur battery according to the present disclosure suppresses the elution of polysulfide (PS) from the positive electrode.

Accordingly, the lithium-sulfur battery according to the present disclosure prevents overvoltage at the end of first discharge (SOC70) during operation, improves reactivity and improves output characteristics.

In particular, the electrolyte for the lithium-sulfur battery according to the present disclosure achieves stable operation during low electrolyte operation by suppressing the elution of PS from the positive electrode.

### DESCRIPTION OF DRAWINGS

The accompanying drawings illustrate an exemplary embodiment of the present disclosure, and together with the foregoing description, serve to provide further understanding of the technical aspect of the present disclosure, and thus, the present disclosure should not be construed as being limited to the drawings.
FIG. 1 is a graph showing the evaluation results of discharge capacity of batteries of examples 1 to 3 and comparative example 1 in the present disclosure.
FIG. 2 is a graph showing the evaluation results of life characteristics vs charge/discharge cycle number in batteries of examples 1 to 3 and comparative example 1 in the present disclosure.
FIG. 3 is a graph showing the evaluation results of discharge capacity of batteries of examples 4 to 7 and comparative example 2 in the present disclosure.
FIG. 4is a graph showing the evaluation results of life characteristics vs charge/discharge cycle number in batteries of examples 4 to 7 and comparative example 2 in the present disclosure.

### BEST MODE

Hereinafter, the present disclosure is described in detail. However, the present disclosure is not limited by the following description, and if necessary, each element may be changed variously or combined selectively. Accordingly, it should be understood that the present disclosure encompasses all modifications, equivalents or substitutes included in the aspect and technical scope of the present disclosure.

In the present disclosure, the term "comprising" specifies the presence of stated elements, but does not preclude the presence or addition of one or more other elements unless expressly stated otherwise.

In the present disclosure, the term "polysulfide (PS)" is the concept including "polysulfide ion (Sₓ²⁻, x = 8, 6, 4, 2)" and "lithium polysulfide (Li₂Sₓ or LiSₓ⁻, x = 8, 6, 4, 2)".

In the present disclosure, "low electrolyte" used in relation to low electrolyte operation of a lithium-sulfur battery may refer to an El/S ratio of 2.5 ml/g or less, the El/S ratio being a ratio of electrolyte to the positive electrode active material in the lithium-sulfur battery. The "low electrolyte operation" is used to describe that an electrolyte for a lithium-sulfur battery according to the present disclosure and a lithium-sulfur battery comprising the same may exhibit outstanding characteristics during low electrolyte operation, and it is obvious to those skilled in the art that it is not intended to limit the operating electrolyte amount of the electrolyte for the lithium-sulfur battery and the lithium-sulfur battery according to the present disclosure.

Polysulfide (PS, LiSx) produced by the reduction of sulfur (S₈) from the positive electrode is eluted into the electrolyte during operation of the lithium-sulfur battery, and in this instance, the electrolyte having a high ratio of solvent to polysulfide induces overvoltage due to the high concentration of polysulfide in the solvent. In contrast, the electrolyte having a high ratio of nonsolvent to polysulfide suppresses the elution of polysulfide, thereby preventing overvoltage. Accordingly, the electrolyte for the lithium-sulfur battery according to an aspect of the present disclosure is intended to suppress the elution of polysulfide into the electrolyte using a specific combination of the nonsolvent and polysulfide.

The electrolyte for the lithium-sulfur battery comprised in the lithium-sulfur battery according to an aspect of the present disclosure comprises a lithium salt and a nonaqueous solvent, and the nonaqueous solvent comprises glycol ether, cyclic ether and acyclic ether represented by the following chemical formula 1.

[Chemical formula 1] R¹-O-R²

(where R¹ is an unsubstituted or substituted C₁-C₃ alkyl group, and R² is an unsubstituted or substituted C₂-C₂₀ alkyl group)

The lithium salt is included as an electrolyte salt in the electrolyte for the lithium-sulfur battery, and the nonaqueous solvent is included as a medium in the electrolyte for the lithium-sulfur battery.

According to the present disclosure, the nonaqueous solvent comprises a combination of three types of ethers, glycol ether comprising two oxygen atoms, cyclic ether comprising at least one oxygen atom (O) or sulfur atom (S) in a ring structure and acyclic ether represented by the above chemical formula 1, to provide the electrolyte for stable low electrolyte operation of the lithium-sulfur battery, but the mechanism of the present disclosure is not limited thereto.

In case where the electrolyte for the lithium-sulfur battery does not comprise the acyclic ether as the nonaqueous solvent and only comprises the glycol ether and the cyclic ether, overvoltage occurs at SOC70 during low electrolyte operation of the battery using the same, and thus according to an aspect of the present disclosure, the acyclic ether is included as the nonaqueous solvent.

Specifically, the acyclic ether comprises a compound represented by the above chemical formula 1.

In relation to the above chemical formula 1, in an embodiment of the present disclosure, the R¹ may be, specifically, an unsubstituted or substituted methyl group, an unsubstituted or substituted ethyl group, or an unsubstituted or substituted propyl group. In this instance, the substituent included in the substituted methyl group, the substituted ethyl group or the substituted propyl group may include, but is not limited to, for example, a halogen atom, a hydroxy group, a nitro group, a cyano group, an amino group, an amidino group, an acetamino group, hydrazine, hydrazone, a carboxyl group, a sulfonyl group, a sulfamoyl group, a sulfonic acid group, phosphoric acid or a combination thereof.

In another embodiment of the present disclosure, the R¹ may be, specifically, an unsubstituted methyl group, an unsubstituted ethyl group, an unsubstituted propyl group, a methyl group substituted with at least one halogen atom, an ethyl group substituted with at least one halogen atom or a propyl group substituted with at least one halogen atom.

In an embodiment of the present disclosure, the R² may be, specifically, an unsubstituted or substituted C₂-C₂₀ alkyl group, and in this instance, the substituent included in the substituted C₂-C₂₀ alkyl group may include, but is not limited to, for example, a halogen atom, a hydroxyl group, a nitro group, a cyano group, an amino group, an amidino group, an acetamino group, hydrazine, hydrazone, a carboxyl group, a sulfonyl group, a sulfamoyl group, a sulfonic acid group, phosphoric acid, a C₁-C₅ alkyl group, a C₁-C₅ alkoxy group, a C₂-C₅ alkenyl group, a C₂-C₅ alkynyl group, a C₄-C₁₀ cyclo alkyl group, a C₆-C₁₀ aryl group, a C₆-C₁₀ heteroaryl group, a C₆-C₂₀ aryl alkyl group, a C₆-C₂₀ heteroaryl alkyl group, or a combination thereof.

In another embodiment of the present disclosure, the R² may include, but is not limited to, for example, an ethyl group, a 2-fluoroethyl group, a 1,2-difluoroethyl group, a 1,1-difluoroethyl group, a 2,2-difluoroethyl group, a 2,2,2-trifluoroethyl group, an n-propyl group, an n-butyl group, an n-amyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosanyl group, an isopropyl group, a sec-butyl group, an iso-butyl group, a tert-butyl group, a 1-methylbutyl group, a 1-ethylpropyl group, a 2-methylbutyl group, an iso-amyl group, a neopentyl group, a 1,2-dimethylpropyl group, a 1,1-dimethylpropyl group, a tert-amyl group, a 1,3-dimethylbutyl group, a 3,3-dimethylbutyl group, a 2-ethylbutyl group, a 2-ethyl-2-methylpropyl group, a straight-chain or branched heptyl group, a 1-methylheptyl group, a 2-ethylhexyl group, a 1,5-dimethylhexyl group, a tert-octyl group, a branched nonyl group, a branched decyl group, a branched undecyl group, a branched dodecyl group, a branched tridecyl group, a branched tetradecyl group, a branched pentadecyl group, a branched hexadecyl group, a branched heptadecyl group, a branched octadecyl group, a straight-chain or branched nonadecyl group, a straight-chain or branched eicosanyl group, a cyclopropyl group, a cyclopropylmethyl group, a cyclobutyl group, a cyclobutylmethyl group, a cyclopentyl group, a cyclohexyl group, a cyclohexylmethyl group, a cycloheptyl group, a cyclooctyl group, a cyclohexylpropyl group, a cyclododecyl group, a norbornyl group, a bornyl group, a cyclopentylethyl group, a bicyclooctyl group or a combination thereof.

In an embodiment of the present disclosure, the R¹ may be an unsubstituted or substituted C₁-C₂ alkyl group, and the R² may be an unsubstituted C₄-C₁₀ alkyl group.

In another embodiment of the present disclosure, the R¹ may be an unsubstituted or substituted C₁-C₂ alkyl group, and the R² may be a substituted C₂-C₁₀alkyl group.

In an embodiment of the present disclosure, the acyclic ether may comprise fluorine-free acyclic ether, fluorine-containing acyclic ether or a mixture thereof.

The "fluorine-free acyclic ether" as used herein refers collectively to compounds in which the alkyl group of R1 and R2 in the chemical formula 1 of the acyclic ether is an unsubstituted alkyl group or a substituted alkyl group, wherein the alkyl group does not contain a fluorine atom (-F) as the substituent. On the contrary, the "fluorine-containing acyclic ether" refers collectively to compounds in which at least one of the alkyl groups of R1 and R2 in the chemical formula 1 of the acyclic ether is a substituted alkyl group, and in this instance, the alkyl group contains at least one fluorine atom (-F) as the substituent.

In an embodiment of the present disclosure, the acyclic ether may comprise fluorine-free acyclic ether. In another embodiment of the present disclosure, the acyclic ether may consist of fluorine-free acyclic ether.

The fluorine-free acyclic ether may include, for example, methyl propyl ether, ethyl propyl ether, dipropyl ether, methyl butyl ether, methyl hexyl ether, ethyl butyl ether, ethyl hexyl ether or a mixture thereof, but is not limited thereto.

In another embodiment of the present disclosure, the acyclic ether may comprise fluorine-containing acyclic ether. In another embodiment of the present disclosure, the acyclic ether may consist of fluorine-containing acyclic ether.

The fluorine-containing acyclic ether may include, for example, bis-(2,2,2-trifluoroethyl) ether, but is not limited thereto.

In another embodiment of the present disclosure, the R¹ and R² may be alkyl groups having different carbon numbers. For example, the R¹ may be an unsubstituted or substituted C₁-C₂ alkyl group, and the R² may be an unsubstituted or substituted C₄-C₁₀ alkyl group. The present disclosure is not limited thereto, but when the R¹ and R² have different carbon numbers, it may be more favorable for low electrolyte operation, but the present disclosure is not limited thereto.

In another embodiment of the present disclosure, when the R1 and R2 are alkyl groups having the same carbon number, in case that the each of R1 and R2 is a halogen-substituted alkyl group, for example, a fluorine-substituted alkyl group, specifically a 2,2,2-trifluoroethyl group, it may be more favorable for low electrolyte operation, but the present disclosure is not limited thereto.

In an embodiment of the present disclosure, the electrolyte for the lithium-sulfur battery may not comprise 1,1,2,2-tetrafluoroethyl-2,2,3,3-tetrafluoropropylether as the acyclic ether. That is, the amount of the 1,1,2,2-tetrafluoroethyl-2,2,3,3-tetrafluoropropyl ether in the electrolyte for the lithium-sulfur battery may be 0 weight%. In case that the electrolyte for the lithium-sulfur battery comprises 1,1,2,2-tetrafluoroethyl-2,2,3,3-tetrafluoropropyl ether, the battery performance may degrade, and preferably, the electrolyte for the lithium-sulfur battery does not comprise1,1,2,2-tetrafluoroethyl-2,2,3,3-tetrafluoropropyl ether, but the present disclosure is not limited thereto.

In an embodiment of the present disclosure, the above-described types of acyclic ethers act as a non-solvent to polysulfide released from the positive electrode, thereby suppressing the elution of polysulfide from the positive electrode. Accordingly, the acyclic ether may improve the low electrolyte operation of the lithium-sulfur battery, but the mechanism of the present disclosure is not limited thereto.

The glycol ether may include, without limitation, any acyclic ether comprising two oxygen atoms that may be used as the electrolyte of the lithium-sulfur battery.

In an embodiment of the present disclosure, the glycol ether may be represented by the following chemical formula 2:

[Chemical formula 2] R³-O-(CH₂CH₂O)_{y}-R⁴

(where R³ and R⁴ are identical or different, and each of them is independently a C₁-C₆ unsubstituted or substituted alkyl group, or a C₆-C₁₂ unsubstituted or substituted aryl group, or a C₇-C₁₃ unsubstituted or substituted aryl alkyl group, x is an integer of 1 to 4, and y is an integer of 0 to 4)

The glycol ether may comprise, for example, at least one of dimethoxy ethane, diethoxy ethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether or polyethylene glycol methyl ethyl ether, but is not limited thereto.

The cyclic ether may include, without limitation, any ether that comprises at least one oxygen atom (O) or sulfur atom (S) in the ring structure, has at least one -C-O-C-structure or -C-S-C- structure in the ring structure, and may be used as the electrolyte of the lithium-sulfur battery. The cyclic ether may comprise, for example, at least one of furan, 2-methyl furan, 3-methyl furan, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene or 2,5-dimethylthiophene, but is not limited thereto.

The lithium salt may include, without limitation, any lithium salt that may be commonly used in the electrolyte of the lithium-sulfur battery. The lithium salt may comprise, for example, at least one of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lower aliphatic lithium carboxylate, lithium tetraphenylborate or lithium imide, but is not limited thereto.

In an embodiment of the present disclosure, the lithium salt may not comprise lithium nitrates. The lithium nitrates may be included as an example of a nitric acid or nitrous acid-based compound as described below.

In an embodiment of the present disclosure, the lithium salt may comprise lithium bis(fluorosulfonyl)imide(LiF SI).

In an embodiment of the present disclosure, the concentration of the lithium salt may be appropriately determined, taking into account the ionic conductivity and solubility, and may be, for example, 0.1 to 4.0 M, 0.5 to 2.0 M, 0.5 to 1.0M or 0.75 M. When the concentration of the lithium salt is in the above-described range, there may be advantageous effects in terms of the ionic conductivity and the viscosity of the electrolyte, but is not limited thereto.

In an embodiment of the present disclosure, when the acyclic ether is included in a large amount based on the total volume of the nonaqueous solvent, the life decreases so fast after the repeated charge/discharge cycles of the battery during low electrolyte operation of the battery using the same, and thus the acyclic ether is included in an amount of 20 vol% or less based on the total volume of the nonaqueous solvent. Specifically, the amount of the acyclic ether may be 18 vol% or less, 15 vol% or less, 12 vol% or less, 10 vol% or less, 8 vol% or less or 5 vol% or less based on the total volume of the nonaqueous solvent. Additionally, the acyclic ether may be included in an amount of 1 vol% or more or 3 vol% or more within the above-described range. When the volume of the acyclic ether is within the above-described range, it may be favorable for low electrolyte operation of the lithium-sulfur battery using the same, but the present disclosure is not limited thereto.

According to the invention, the amount of the glycol ether is 65 vol% or more, and the sum of amounts of the cyclic ether and the acyclic ether is 35 vol% or less based on the total volume of the nonaqueous solvent. The amount of the acyclic ether is 20 vol% or less based on the total volume of the nonaqueous solvent.

In another embodiment of the present disclosure, the amount of the glycol ether may be 65 vol% to 85 vol% or 70 vol% to 80 vol%, and the sum of amounts of the cyclic ether and the acyclic ether may be 15 vol% to 35 vol% or 20 vol% to 30 vol% based on the total volume of the nonaqueous solvent. Here, the amount of the acyclic ether may be 1 vol% to 20 vol%, 3 vol% to 15 vol% or 5 vol% to 10 vol% based on the total volume of the nonaqueous solvent.

In another embodiment of the present disclosure, when the volume ratio of the glycol ether, the cyclic ether and the acyclic ether is in the above-described range, it may be favorable for low electrolyte operation of the lithium-sulfur battery using the same, but the present disclosure is not limited thereto.

In an embodiment of the present disclosure, the ratio of the total volume of the glycol ether to the total volume of the acyclic ether may be 5 or more. When the acyclic ether is included in an amount having the above-described ratio to the volume of the glycol ether in the nonaqueous solvent, it may be favorable for the overvoltage prevention at SOC70 during low electrolyte operation of the battery using the same, but the present disclosure is not limited thereto.

In an embodiment of the present disclosure, the ratio of the total volume of the glycol ether to the total volume of the acyclic ether may be 5.5 or more. Specifically, the ratio of the total volume of the glycol ether to the total volume of the acyclic ether may be 6 or more, 6.5 or more, 7 or more, 7.5 or more or 8 or more. More specifically, the ratio of the total volume of the glycol ether to the total volume of the acyclic ether may be, for example, 5 to 15, 5 to 13, 5 to 10, 6 to 10, 6.5 to 10, 7 to 10 or 8 to 10.

In another embodiment of the present disclosure, the acyclic ether may be included in an amount of 10 vol% or less based on the total volume of the nonaqueous solvent, and the ratio of the total volume of the glycol ether to the total volume of the acyclic ether may be 6.5 or more.

In an embodiment of the present disclosure, the nonaqueous solvent may comprise dimethoxy ethane, 2-methyl furan and dipropyl ether.

In another embodiment of the present disclosure, the nonaqueous solvent may comprise dimethoxy ethane, 2-methylfuran and ethyl t-butyl ether.

In another embodiment of the present disclosure, the nonaqueous solvent may comprise dimethoxy ethane, 2-methylfuran and methyl hexyl ether.

In another embodiment of the present disclosure, the nonaqueous solvent may comprise dimethoxy ethane, 2-methylfuran and bis-(2,2,2-trifluoroethyl) ether.

In an embodiment of the present disclosure, in addition to the above-described composition, the electrolyte for the lithium-sulfur battery may further comprise a nitric acid compound, a nitrous acid compound or a mixture thereof. The nitric acid compound or nitrous acid-based compound may, for example, form a stable film on the negative electrode of lithium metal and improve charge/discharge efficiency, but the mechanism of the present disclosure is not limited thereto.

In the present disclosure, the nitric acid compound or nitrous acid-based compound is not limited to a particular type, but may include, for example, an inorganic nitric acid or nitrous acid compound such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₃), cesium nitrite (CsNO₂), ammonium nitrite (NH₄NO₂); an organic nitric acid or nitrous acid compound such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; an organic nitro compound such as nitromethane, nitropropane, nitrobutane, nitrobenzene, dinitrobenzene, nitro pyridine, dinitro pyridine, nitrotoluene, dinitrotoluene, or a mixture thereof.

In an embodiment of the present disclosure, the electrolyte for the lithium-sulfur battery may further comprise lithium nitrate (LiNO₃).

In another embodiment of the present disclosure, in addition to the above-described composition, the electrolyte for the lithium-sulfur battery may further comprise an additive to improve charge/discharge characteristics, flame retardancy, etc. In the present disclosure, the additive is not limited to a particular type, but may include, for example, pyridine, triethylphosphite, triethanolamine, ethylene diamine, n-glyme, hexa phosphorous triamide, nitrobenzene derivatives, sulfur, a quinone imine dye, N-substituted oxazolidinone, N,N-substituted imidazolidine, an ammonium salt, pyrrole, 2-methoxy ethanol, aluminum trichloride, fluoro ethylene carbonate (FEC), propene sultone (PRS) and vinylene carbonate (VC).

The electrolyte for the lithium-sulfur battery according to an aspect of the present disclosure may be prepared by methods commonly used in the corresponding technical field, and the present disclosure is not limited to a particular method.

The lithium-sulfur battery according to the present disclosure comprises the above-described electrolyte for the lithium-sulfur battery, and a positive electrode comprising a positive electrode active material and a negative electrode comprising a negative electrode active material.

The lithium-sulfur battery according to the present invention has the El/S ratio (EL(electrolyte)/S(sulfur) ratio) of 1.8 or more and 2.2 or less, the El/S ratio being a ratio of the electrolyte to the positive electrode active material.

In an embodiment of the present disclosure, since the electrolyte for the lithium-sulfur battery may exhibit the outstanding operation characteristics in low electrolyte condition, the lithium-sulfur battery using the same may achieve low electrolyte or high energy density.

According to the invention, the lithium-sulfur battery may exhibit the outstanding effect, for example, in the El/S ratio condition of 2.1 or less or 2.0 or less, but the present disclosure is not limited thereto. It represents that the lithium-sulfur battery may exhibit the outstanding effect during low electrolyte operation, and those skilled in the art will clearly understand that batteries having higher El/S ratios than the above-described El/S ratio also exhibit the outstanding effect.

According to the invention, the lithium-sulfur battery may exhibit the outstanding effect, in the El/S ratio condition 1.8 or more and 2.2 or less.

The positive electrode, the positive electrode active material, the negative electrode and the negative electrode active material are not limited to particular types, and may include any type of them that may be used in the lithium-sulfur battery without departing from the scope of the present disclosure.

For example, the positive electrode may comprise a positive electrode current collector and a positive electrode active material layer coated on one or two surfaces of the positive electrode current collector, and the negative electrode may comprise a negative electrode current collector and a negative electrode active material layer coated on one or two surfaces of the negative electrode current collector.

In this instance, the positive electrode current collector is not limited to a particular type and may include any type of material that supports the positive electrode active material and has high conductivity while not causing any chemical change to the corresponding battery, and the negative electrode current collector is not limited to a particular type and may include any type of material that supports the negative electrode active material and has high conductivity while not causing any chemical change to the corresponding battery.

In an embodiment of the present disclosure, the positive electrode active material may comprise, for example, sulfur, a sulfur compound or a mixture thereof. Specifically, the positive electrode active material may comprise at least one of an inorganic sulfur, Li₂Sₙ (n≥1), a disulfide compound, an organic sulfur compound or a carbon-sulfur polymer ((C₂Sₓ)ₙ, x=2.5 to 50, n≥2).

In an embodiment of the present disclosure, the negative electrode active material is not limited to a particular type and may include a material capable of reversible intercalation or deintercalation of lithium (Li⁺), or a material that reversibly forms a lithium containing compound by reaction with lithium ions. For example, the negative electrode active material may comprise a lithium metal, a lithium alloy or a mixture thereof. The lithium alloy may include, for example, an alloy of lithium (Li) and at least one metal of sodium (Na), potassium (K), rubidium (Rb), cesium (Cs), francium (Fr), beryllium (Be), magnesium (Mg), calcium (Ca), strontium (Sr), barium (Ba), radium (Ra), aluminum(Al) or tin (Sn).

Additionally, in addition to the active material, each of the positive electrode active material layer and the negative electrode active material layer may further comprise a conductive material, a binder and an additive, and they may include the commonly used types, so its description is omitted.

Hereinafter, the present disclosure will be described in more detail through example, but the following example is provided to describe the present disclosure by way of illustration, and the scope of the present disclosure is not limited thereto.

### Experimental example 1.Evaluation of battery operation characteristics vs composition of nonaqueous solvent

First, a pouch cell type lithium-sulfur battery was manufactured by the following method, and its operation characteristics were evaluated.

### [Manufacture of lithium-sulfur battery]

### Example 1.

### Preparation of electrolyte for lithium-sulfur battery

0.75 M lithium bis(fluorosulfonyl)imide (LiFSI) and 4.0 weight% of lithium nitrate (LiNO₃) were added to dimethoxy ethane (DME) and dissolved by stirring for 12 hours, followed by stirring with an addition of 2-methyl furan and dipropyl ether to prepare an electrolyte.

In this instance, a volume ratio of dimethoxy ethane: 2-methyl furan: dipropyl ether used was 80:10:10.

### Manufacture of positive electrode

A sulfur-carbon composite (S:C=75:25(weight ratio)) as a positive electrode active material and lithium polyacrylate (LiPAA) as a binder were mixed at a weight ratio of 95:5 using distilled water as a solvent to prepare a positive electrode slurry.

The prepared positive electrode slurry composition was coated on two surfaces of a 12 *µ*m thick aluminum current collector, dried at 80°C and rolled using a roll press to manufacture a positive electrode. In this instance, a loading amount of the positive electrode active material was 3.5 mAh/cm².

### Manufacture of negative electrode

A 60 *µ*m thick lithium metal was prepared as a negative electrode.

### Manufacture of lithium-sulfur battery

The negative electrode manufactured as described above was placed in contact between the two sheets of positive electrodes with a polyethylene separator having the thickness of 16 *µ*m and the porosity of 68% interposed therebetween and stacked to assemble a pouch cell. In this instance, an N/P ratio was 1.754.Subsequently, 0.86 ml of the prepared electrolyte was injected such that an El/S (Electrolyte/S loading amount) ratio is 2.1 ml/g, followed by sealing, to manufacture a pouch-type lithium-sulfur battery. The manufactured battery has capacity of 0.6Ah, energy of 1.29 Wh, and a ratio of energy and electrolyte of 455 Wh/kg.

### Example 2

A lithium-sulfur battery was manufactured by the same method as example 1 except that ethyl t-butyl ether was used instead of dipropyl ether.

### Example 3

A lithium-sulfur battery was manufactured by the same method as example 1 except that methyl hexyl ether was used instead of dipropyl ether.

### Comparative example 1

A lithium-sulfur battery was manufactured by the same method as example 1 except that dibutyl ether was used instead of dipropyl ether.

### [Evaluation method and result]

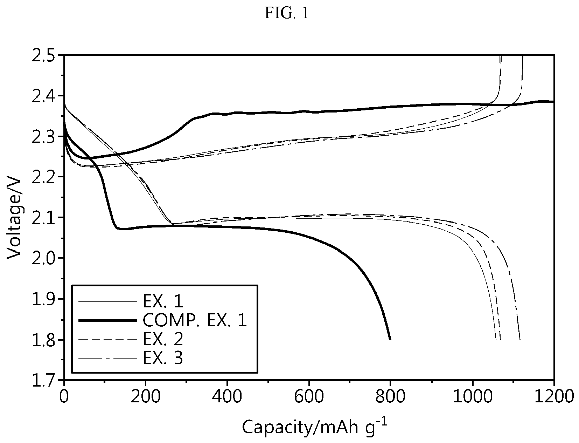

FIG. 1 shows the evaluation results of the batteries of examples 1 to 3 and comparative example 1 after one cycle with 0.1C charge/0.1C discharge (each 2.5V upper limit/1.8V lower limit) at 25°C.

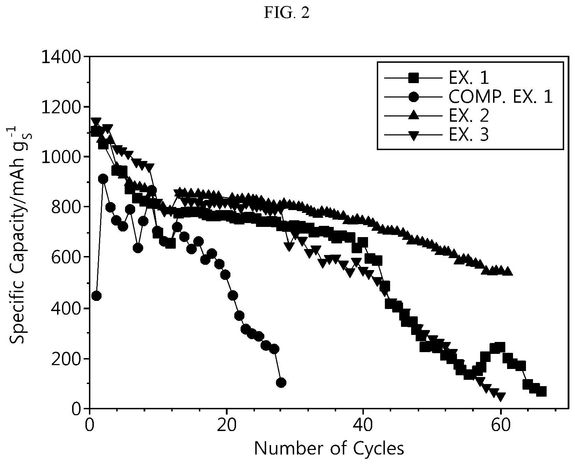

Additionally, FIG. 2 shows the evaluation results of discharge capacity vs cycle number in each of the batteries of examples 1 to 3 and comparative example 1 during operation in three cycles with each of 0.1C, 0.2C, 0.3C and 0.5C for initial 12 cycles at 25°C and then operation with 0.1C.

As can be seen from FIGS. 1 and 2, it was confirmed that when dipropyl ether, ethyl t-butyl ether or methyl hexyl ether was used as the acyclic ether, the battery of El/S 2.1 exhibited good performance during operation, but when dibutyl ether was used as the acyclic ether, the battery of El/S 2.1 exhibited low battery capacity and stability of the battery vs charge/discharge cycle number during operation.

### Experimental example 2. Evaluation of battery operation characteristics vs amount of acyclic ether

First, a pouch cell-type lithium-sulfur battery was manufactured by the following method, and its operation characteristics were evaluated.

### [Manufacture of lithium-sulfur battery]

### Example 4

### Preparation of electrolyte for lithium-sulfur battery

0.75 M lithium bis(fluorosulfonyl)imide (LiFSI) and 4.0 weight% of lithium nitrate (LiNO₃) were added to dimethoxy ethane(DME) and dissolved by stirring for 12 hours, followed by stirring with an addition of 2-methylfuran and bis-(2,2,2-trifluoroethyl) ether to prepare an electrolyte.

In this instance, a volume ratio of dimethoxyethane:2-methylfuran:bis-(2,2,2-trifluoroethyl) ether used is 85:10:5.

### Manufacture of positive electrode

A sulfur-carbon composite(S:C=75:25(weight ratio)) as a positive electrode active material and lithium polyacrylate (LiPAA) as a binder were mixed at a weight ratio of 95:5 using distilled water as a solvent to prepare a positive electrode slurry.

The prepared positive electrode slurry composition was coated on two surfaces of a 12 *µ*mthick aluminum current collector, dried at 80°C and rolled using a roll press to manufacture a positive electrode. In this instance, a loading amount of the positive electrode active material is 3.5 mAh/cm².

### Manufacture of negative electrode

A 60 *µ*m thick lithium metal was prepared as a negative electrode.

### Manufacture of lithium-sulfur battery

The negative electrode manufactured as described above was placed in contact between the two sheets of positive electrodes with a polyethylene separator having the thickness of 16 *µ*m and the porosity of 68% interposed therebetween and stacked to assemble a pouch cell. In this instance, an N/P ratio was 2. Subsequently, 0.82 ml of the prepared electrolyte was injected such that an El/S(Electrolyte/S loading amount)ratio is 2.0 ml/g, followed by sealing, to manufacture a pouch-type lithium-sulfur battery. The manufactured battery has capacity of 0.6 Ah, energy of 1.29 Wh, anda ratio of energy and electrolyte of 465 Wh/kg.

### Example 5

A lithium-sulfur battery was manufactured by the same method as example 4 except that the volume ratio of dimethoxyethane:2-methylfuran:bis-(2,2,2-trifluoroethyl) ether was 80:10:10.

### Example 6

A lithium-sulfur battery was manufactured by the same method as example 4 except that the volume ratio of dimethoxyethane:2-methylfuran:bis-(2,2,2-trifluoroethyl) ether was 75:10:15.

### Example 7

A lithium-sulfur battery was manufactured by the same method as example 4 except that the volume ratio of dimethoxyethane:2-methylfuran:bis-(2,2,2-trifluoroethyl) ether was70:10:20.

### Comparative example 2

A lithium-sulfur battery was manufactured by the same method as example 4 except the use of the electrolyte having a volume ratio of dimethoxyethane:2-methylfuran of 85:15 using the same amount of 2-methylfuran instead of bis-(2,2,2-trifluoroethyl) ether.

### [Evaluation method and result]

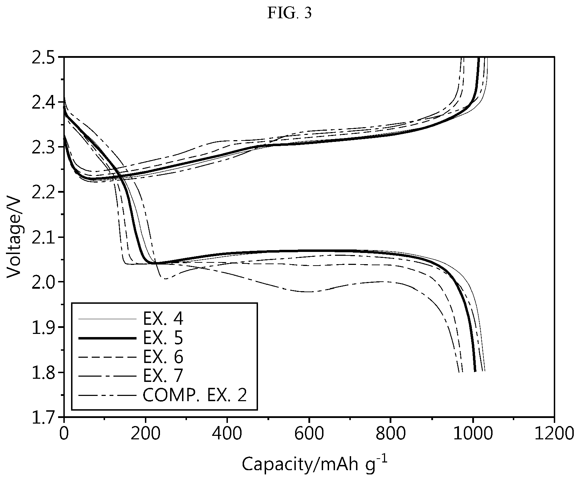

FIG. 3 shows the evaluation results of discharge capacity of the batteries of examples 4 to 7 and comparative example 2 after three cycles with 0.1C charge/0.1C discharge (each 2.5V upper limit/1.8V lower limit) at 25°C.

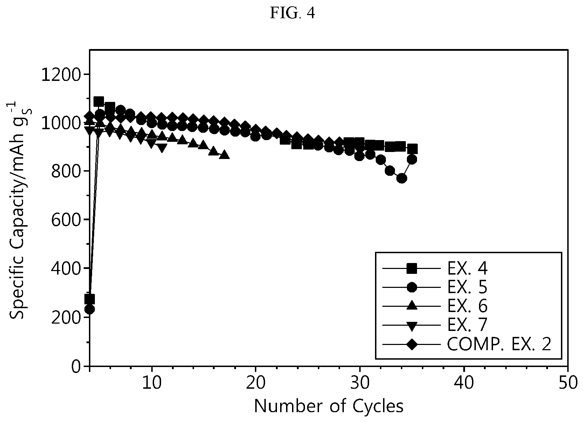

Additionally, FIG. 4 shows the evaluation results of discharge capacity vs cycle number in each battery of examples 4 to 7 and comparative example 2 during operation in three cycles with 0.1C, 25°C, one cycle with each of 0.1C, 0.2C, 0.3C and 0.5C, and then 0.1C.

As can be seen from FIG. 3, it was confirmed that examples 4 and 5 may reduce overvoltage compared to comparative example 2.

As can be seen from FIG. 4, it was confirmed that the life characteristics vs charge/discharge cycle number may be further improved in an order of 20 vol% (example 7)<15 vol%(example 6)<10 vol%(example 5) ≤ 5 vol%(example 4) of the volume of the acyclic ether based on 100 vol% of the solvent.

## Claims

1. A lithium-sulfur battery, comprising:
an electrolyte for a lithium-sulfur battery, comprising:
a lithium salt and a nonaqueous solvent,
wherein the nonaqueous solvent comprises glycol ether, cyclic ether comprising at least one oxygen atom or sulfur atom in a ring structure and acyclic ether represented by the following chemical formula 1:
[Chemical formula 1] R¹-O-R²
where R¹ is an unsubstituted or substituted C₁-C₃ alkyl group, and R² is an unsubstituted or substituted C₂-C₂₀ alkyl group;
a positive electrode comprising a positive electrode active material; and
a negative electrode comprising a negative electrode active material;
wherein the lithium-sulfur battery has an El/S ratio of 1.8 or more and 2.2 ml/g or less, the El/S ratio being a ratio of the electrolyte to the positive electrode active material;
wherein an amount of the glycol ether is 65 vol% or more, and a sum of amounts of the cyclic ether and the acyclic ether is 35 vol% or less, based on a total volume of the nonaqueous solvent, and
wherein the amount of the acyclic ether is 20 vol% or less based on the total volume of the nonaqueous solvent.

2. The lithium-sulfur battery according to claim 1, wherein the R¹ is an unsubstituted or substituted C₁-C₂ alkyl group, and
wherein the R² is an unsubstituted C₄-C₁₀ alkyl group; or a substituted C₂-C₁₀ alkyl group.

3. The lithium-sulfur battery according to claim 1, wherein the acyclic ether comprises fluorine-free acyclic ether.

4. The lithium-sulfur battery according to claim 3, wherein the fluorine-free acyclic ether comprises methyl propyl ether, ethyl propyl ether, dipropyl ether, methyl butyl ether, methyl hexyl ether, ethyl butyl ether, ethyl hexyl ether or a mixture thereof.

5. The lithium-sulfur battery according to claim 1, wherein the acyclic ether comprises fluorine-containing acyclic ether.

6. The lithium-sulfur battery according to claim 5, wherein the fluorine-containing acyclic ether comprises bis-(2,2,2-trifluoroethyl) ether.

7. The lithium-sulfur battery according to claim 1, wherein the electrolyte for the lithium-sulfur battery does not comprise 1,1,2,2-tetrafluoroethyl-2,2,3,3-tetrafluoropropyl ether.

8. The lithium-sulfur battery according to claim 1, wherein the glycol ether comprises at least one of dimethoxy ethane, diethoxy ethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether or polyethylene glycol methyl ethyl ether.

9. The lithium-sulfur battery according to claim 1, wherein the cyclic ether comprises at least one of furan, 2-methyl furan, 3-methyl furan, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene or 2,5-dimethylthiophene.

10. The lithium-sulfur battery according to claim 1, wherein the acyclic ether is included in an amount of 5 vol% or less based on a total volume of the nonaqueous solvent.

11. The lithium-sulfur battery according to claim 1, wherein the positive electrode active material comprises sulfur, a sulfur compound or a mixture thereof.

12. The lithium-sulfur battery according to claim 1, wherein the negative electrode active material comprises a lithium metal, a lithium alloy or a mixture thereof.

## Patentansprüche

1. Lithium-Schwefel-Batterie, umfassend:
einen Elektrolyten für eine Lithium-Schwefel-Batterie, umfassend:
ein Lithiumsalz und ein nichtwässriges Lösungsmittel,
wobei das nichtwässrige Lösungsmittel Glycolether, cyclischen Ether
umfassend mindestens ein Sauerstoffatom oder Schwefelatom in einer Ringstruktur und acyclischen Ether, dargestellt durch die folgende chemische Formel 1:
[Chemische Formel 1] R¹-O-R²
wobei R¹ eine unsubstituierte oder substituierte C₁-C₃-Alkylgruppe ist und R² eine unsubstituierte oder substituierte C1-C3-Alkylgruppe ist, eine unsubstituierte oder substituierte C₂-C₂₀-Alkylgruppe;
eine positive Elektrode, umfassend ein Positivelektrodenaktivmaterial; und
eine negative Elektrode, umfassend ein Negativelektrodenaktivmaterial;
wobei die Lithium-Schwefel-Batterie ein El/S-Verhältnis von 1,8 oder mehr und 2,2 ml/g oder weniger aufweist, wobei das El/S-Verhältnis ein Verhältnis des Elektrolyten zu dem Positivelektrodenaktivmaterial ist;
wobei eine Menge des Glycolethers 65 Vol.-% oder mehr beträgt und eine Summe von Mengen des cyclischen Ethers und des acyclischen Ethers 35 Vol.-% oder weniger beträgt, bezogen auf ein Gesamtvolumen des nichtwässrigen Lösungsmittels, und
wobei die Menge des acyclischen Ethers 20 Vol.-% oder weniger beträgt, bezogen auf das Gesamtvolumen des nichtwässrigen Lösungsmittels.

2. Lithium-Schwefel-Batterie nach Anspruch 1, wobei das R¹ eine unsubstituierte oder substituierte C₁-C₂-Alkylgruppe ist und
wobei das R² eine unsubstituierte C₄-C₁₀-Alkylgruppe oder eine substituierte C₂-C₁₀-Alkylgruppe ist.

3. Lithium-Schwefel-Batterie nach Anspruch 1, wobei der acyclische Ether fluorfreien acyclischen Ether umfasst.

4. Lithium-Schwefel-Batterie nach Anspruch 3, wobei der fluorfreie acyclische Ether Methylpropylether, Ethylpropylether, Dipropylether, Methylbutylether, Methylhexylether, Ethylbutylether, Ethylhexylether oder eine Mischung davon umfasst.

5. Lithium-Schwefel-Batterie nach Anspruch 1, wobei der acyclische Ether fluorhaltigen acyclischen Ether umfasst.

6. Lithium-Schwefel-Batterie nach Anspruch 5, wobei der fluorhaltige acyclische Ether Bis-(2,2,2-trifluorethyl)ether umfasst.

7. Lithium-Schwefel-Batterie nach Anspruch 1, wobei der Elektrolyt für die Lithium-Schwefel-Batterie keinen 1,1,2,2-Tetrafluorethyl-2,2,3,3-tetrafluorpropylether umfasst.

8. Lithium-Schwefel-Batterie nach Anspruch 1, wobei der Glycolether mindestens eines von Dimethoxyethan, Diethoxyethan, Ethylenglycolethylmethylether, Diethylenglycoldimethylether, Diethylenglycoldiethylether, Diethylenglycolmethylethylether, Triethylenglycoldimethylether, Triethylenglycoldiethylether, Triethylenglycolmethylethylether, Tetraethylenglycoldimethylether, Tetraethylenglycoldiethylether, Tetraethylenglycolmethylethylether, Polyethylenglycoldimethylether, Polyethylenglycoldiethylether oder Polyethylenglycolmethylethylether umfasst.

9. Lithium-Schwefel-Batterie nach Anspruch 1, wobei der cyclische Ether mindestens eines von Furan, 2-Methylfuran, 3-Methylfuran, 2-Ethylfuran, 2-Propylfuran, 2-Butylfuran, 2,3-Dimethylfuran, 2,4-Dimethylfuran, 2,5-Dimethylfuran, Pyran, 2-Methylpyran, 3-Methylpyran, 4-Methylpyran, Benzofuran, 2-(2-Nitrovinyl)furan, Thiophen, 2-Methylthiophen, 2-Ethylthiophen, 2-Propylthiophen, 2-Butylthiophen, 2,3-Dimethylthiophen, 2,4-Dimethylthiophen oder 2,5-Dimethylthiophen umfasst.

10. Lithium-Schwefel-Batterie nach Anspruch 1, wobei der acyclische Ether in einer Menge von 5 Vol.-% oder weniger enthalten ist, bezogen auf ein Gesamtvolumen des nichtwässrigen Lösungsmittels.

11. Lithium-Schwefel-Batterie nach Anspruch 1, wobei das Positivelektrodenaktivmaterial Schwefel, eine Schwefelverbindung oder eine Mischung davon umfasst.

12. Lithium-Schwefel-Batterie nach Anspruch 1, wobei das Negativelektrodenaktivmaterial ein Lithiummetall, eine Lithiumlegierung oder eine Mischung davon umfasst.

## Revendications

1. Batterie au lithium-soufre, comprenant :
un électrolyte pour une batterie au lithium-soufre, comprenant :
un sel de lithium et un solvant non aqueux,
dans laquelle le solvant non aqueux comprend un éther de glycol, un éther cyclique comprenant soit un atome d'oxygène, soit un atome de soufre dans une structure cyclique et un éther acyclique représenté par la formule chimique 1 ci-après :
[Formule chimique 1] R¹-O-R²
où R¹ est un groupe alkyle en C₁-C₃ non substitué ou substitué, et R² est un groupe alkyle en C₂-C₂₀ non substitué ou substitué ;
une électrode positive comprenant un matériau actif d'électrode positive ; et
une électrode négative comprenant un matériau actif d'électrode négative ;
dans laquelle la batterie au lithium-soufre a un rapport El/S égal ou supérieur à 1,8 et égal ou inférieur à 2,2 ml/g, un rapport El/S qui est un rapport de l'électrolyte au matériau actif d'électrode positive ;
dans laquelle une quantité de l'éther de glycol est égale ou supérieure à 65 % en volume, et une somme des quantités de l'éther cyclique et de l'éther acyclique est égale ou inférieure à 35 % en volume, sur la base du volume total du solvant non aqueux, et
dans laquelle la quantité de l'éther acyclique est égale ou inférieure à 20 % en volume sur la base du volume total du solvant non aqueux.

2. Batterie au lithium-soufre selon la revendication 1, dans laquelle R¹ est un groupe alkyle en C₁-C₂ non substitué ou substitué, et
dans laquelle R² est un groupe alkyle en C₄-C₁₀ non substitué ; ou un groupe alkyle en C₂-C₁₀ substitué.

3. Batterie au lithium-soufre selon la revendication 1, dans laquelle l'éther acyclique comprend un éther acyclique exempt de fluor.

4. Batterie au lithium-soufre selon la revendication 3, dans laquelle l'éther acyclique exempt de fluor comprend un éther méthylpropylique, éther éthylpropylique, éther dipropylique, éther méthylbutylique, éther méthylhexylique, éther éthylbutylique, éther éthylhexylique ou un mélange de ces derniers.

5. Batterie au lithium-soufre selon la revendication 1, dans laquelle l'éther acyclique comprend un éther acyclique contenant du fluor.

6. Batterie au lithium-soufre selon la revendication 5, dans laquelle l'éther acyclique contenant du fluor comprend l'éther de bis-(2,2,2-trifluoroéthyle).

7. Batterie au lithium-soufre selon la revendication 1, dans laquelle l'électrolyte pour la batterie au lithium-soufre ne comprend pas d'éther de 1,1,2,2-tétrafluoroéthyle-2,2,3,3-tétrafluoropropyle.

8. Batterie au lithium-soufre selon la revendication 1, dans laquelle l'éther de glycol comprend un ou plusieurs éléments parmi un diméthoxyéthane, un diéthoxyéthane, un éther d'éthylméthyle d'éthylène glycol, un éther de diméthyle de diéthylène glycol, un éther de diéthyle de diéthylène glycol, un éther d'éthylméthyle de diéthylène glycol, un éther de diméthyle de triéthylène glycol, un éther de diéthyle de triéthylène glycol, un éther d'éthylméthyle de triéthylène glycol, un éther de diméthyle de tétraéthylène glycol, un éther de diéthyle de tétraéthylène glycol, un éther d'éthylméthyle de tétraéthylène glycol, un éther de diméthyle de polyéthylène glycol, un éther de diéthyle de polyéthylène glycol ou un éther d'éthylméthyle de polyéthylène glycol.

9. Batterie au lithium-soufre selon la revendication 1, dans laquelle l'éther cyclique comprend un ou plusieurs éléments parmi le furane, 2-méthylfurane, 3-méthylfurane, 2-éthylfurane, 2-propylfurane, 2-butylfurane, 2,3-diméthylfurane, 2,4-diméthylfurane, 2,5-diméthylfurane, pyrane, 2-méthylpyrane, 3-méthylpyrane, 4-méthylpyrane, benzofurane, 2-(2-nitrovinyl)furane, thiophène, 2-méthylthiophène, 2-éthylthiophène, 2-propylthiophène, 2-butylthiophène, 2,3-diméthylthiophène, 2,4-diméthylthiophène ou 2,5-diméthylthiophène.

10. Batterie au lithium-soufre selon la revendication 1, dans laquelle l'éther acyclique est inclus dans une quantité égale ou inférieure à 5 % en volume sur la base du volume total du solvant non aqueux.

11. Batterie au lithium-soufre selon la revendication 1, dans laquelle le matériau actif d'électrode positive comprend un soufre, un composé de soufre ou un mélange de ces derniers.

12. Batterie au lithium-soufre selon la revendication 1, dans laquelle le matériau actif d'électrode négative comprend un lithium métal, un alliage de lithium ou un mélange de ces derniers.
